# EUROPÄISCHE PATENTSCHRIFT

(11) **EP 2 130 968 B1**
(45) Veröffentlichungstag und Bekanntmachung des Hinweises auf die Patenterteilung: **15.09.2010**
(21) Anmeldenummer: 09006983.2
(22) Anmeldetag: 26.05.2009
(51) Int. Cl.: D06F 95/00, B65G 9/00, B07C 3/08

(54) **Transport-Tasche und Förder-Anlage für eine Transport-Tasche**
Transport bag and transport assembly for a transport bag
Sac de transport et installation de convoyage pour un sac de transport

(30) Priorität: 04.06.2008 DE 102008026720
(43) Veröffentlichungstag der Anmeldung: 09.12.2009
(73) Patentinhaber: Dürkopp Fördertechnik GmbH, 33719 Bielefeld (DE)
(72) Erfinder: Janzen, Paul, 33619 Bielefeld (DE)
(74) Vertreter: Rau, Albrecht

(56) Entgegenhaltungen:
- EP-A- 1 690 811
- DE-A1-102004 018 569
- DE-B- 1 228 087

## Beschreibung

Die Erfindung betrifft eine Transport-Tasche nach dem Oberbegriff des Anspruches 1 und eine Förder-Anlage mit mindestens einer Transport-Tasche.

Aus der DE 1 228 087 B ist eine Transport-Tasche bekannt, die für Briefsortiermaschinen ausgebildet ist. Sie weist einen oben offenen Kasten auf, der eine erste Wand und eine hierzu parallele zweite Wand aufweist. An der zweiten Wand ist ein wegschwenkbarer starrer Boden angelenkt, der mittels eines Hebelsystems geöffnet oder geschlossen werden kann. Nach dem Schließen wird ein entsprechender Schließhebel eingerastet.

Aus der EP 1 690 811 A1 sind Förder-Anlagen bekannt, in denen in Schienen mittels Ketten Mitnehmer transportiert werden, die Ösen aufweisen, in die Bügel eingehängt werden, auf denen wiederum in der Regel Bekleidungsstücke transportiert werden. Es sind weiterhin Trage-Taschen bekannt, die aus flexiblem Material, beispielsweise einem Gewebe in Form einer Bahn bestehen, wobei im oberen Bereich ein etwa rechteckiger, die beiden Enden der Gewebe-Bahn aufnehmender rahmenartiger Bügel vorgesehen ist. In die seitlich zur Förderrichtung offene Tasche können Gegenstände eingelegt und transportiert werden, die nicht auf Bügel aufgehängt werden können.

Aus der DE 10 2004 018 569 A1 ist eine Förder-Anlage bekannt, mittels derer Trage-Taschen mit der Merkmalen des Oberbegriffs von Anspruch 1 transportiert werden. Die in Transportrichtung nacheilende Wand weist an ihrem oberen Ende einen quer zur Transportrichtung verlaufenden rahmenartigen Bügel auf, der in einer Belade-Station auf eine Schiene aufläuft und angehoben wird. Dadurch wird die Tasche geöffnet.

Der Erfindung liegt die Aufgabe zugrunde, eine Transport-Tasche zu schaffen, die in Förder-Anlagen transportiert und die automatisch entladen werden kann, und eine Förder-Anlage mit mindestens einer solchen Transport-Tasche anzugeben.

Diese Aufgabe wird für eine Transport-Tasche nach dem Oberbegriff des Anspruches 1 erfindungsgemäß durch die Merkmale im Kennzeichnungsteil des Anspruches 1 gelöst. Die Transport-Tasche besteht aus einer zumindest formstabilen Trage-Wand, die in ihrem unterem Bereich mit mindestens einer Kupplung ausgerüstet ist und die in ihrem oberen Bereich mit Mitteln zum Auslösen der Kupplung versehen ist. Die Boden-Seiten-Wand ist zumindest in ihrem unteren Bereich flexibel ausgebildet und weist Gegen-Kupplungs-Mittel auf, die mit der Kupplung in Eingriff bringbar sind, sodass die Transport-Tasche unten geschlossen werden kann. Wenn die Kupplung geöffnet wird, öffnet die Transport-Tasche nach unten und gibt eine transportierte Ware ab. Die hierzu gehörige Förder-Anlage ist durch die Merkmale des Anspruches 10 gekennzeichnet. Die Unteransprüche geben vorteilhafte Ausgestaltungen wieder.

Weitere Vorteile, Merkmale und Einzelheiten der Erfindung ergeben sich aus der nachfolgenden Beschreibung eines Ausführungsbeispiels anhand der Zeichnung. Es zeigt:

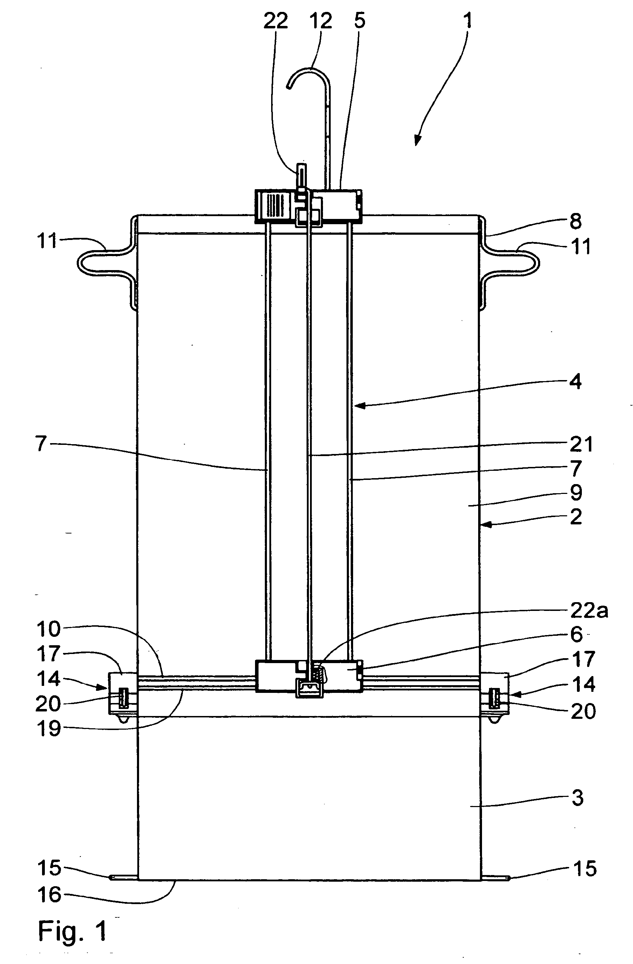

- Fig. 1: eine Transport-Tasche nach der Erfindung in einer Ansicht auf ihre Trage-Wand,
- Fig. 2: die Transport-Tasche in einer Ansicht auf ihre Boden-Seiten- Wand,

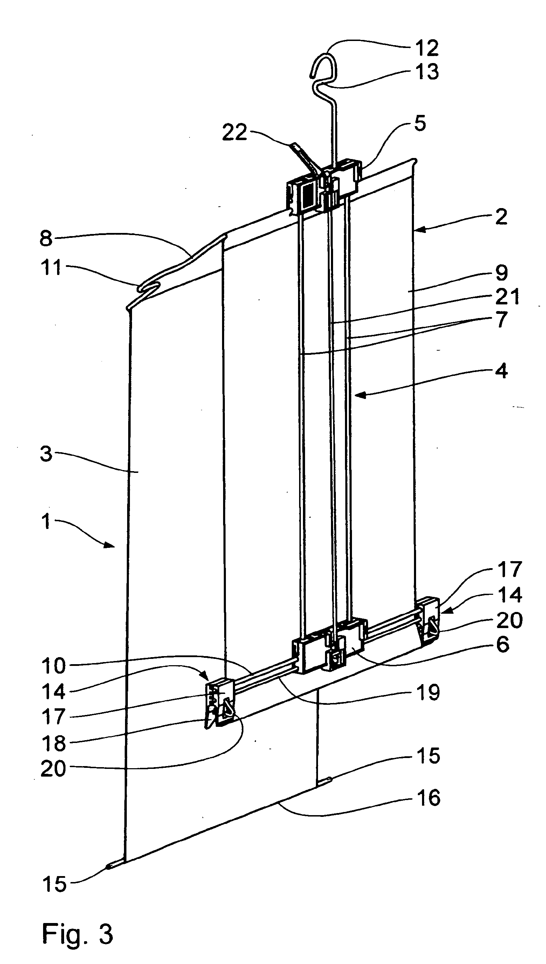

- Fig. 3: eine perspektivische Seiten-Ansicht der Transport-Tasche mit von der Trage-Wand abgekoppelter Boden-Seiten-Wand,
- Fig. 4: die Transport-Tasche in einer Darstellung entsprechend Fig. 3 mit an die Trage-Wand angekoppelter Boden-Seiten-Wand,
- Fig. 5: Transport-Taschen in einer Belade-Station,
- Fig. 6: Entladen der Transport-Taschen in einer Entladestation,
- Fig. 7: Transport-Taschen in einer Schließ-Station,
- Fig. 8: eine schematisierte Teil-Darstellung des Schließ-Vorgangs in der Schließ-Station,
- Fig. 9: eine Transport-Tasche in der Schließ-Station am Ende des An- koppelns der Boden-Seiten-Wand an die Trage-Wand und

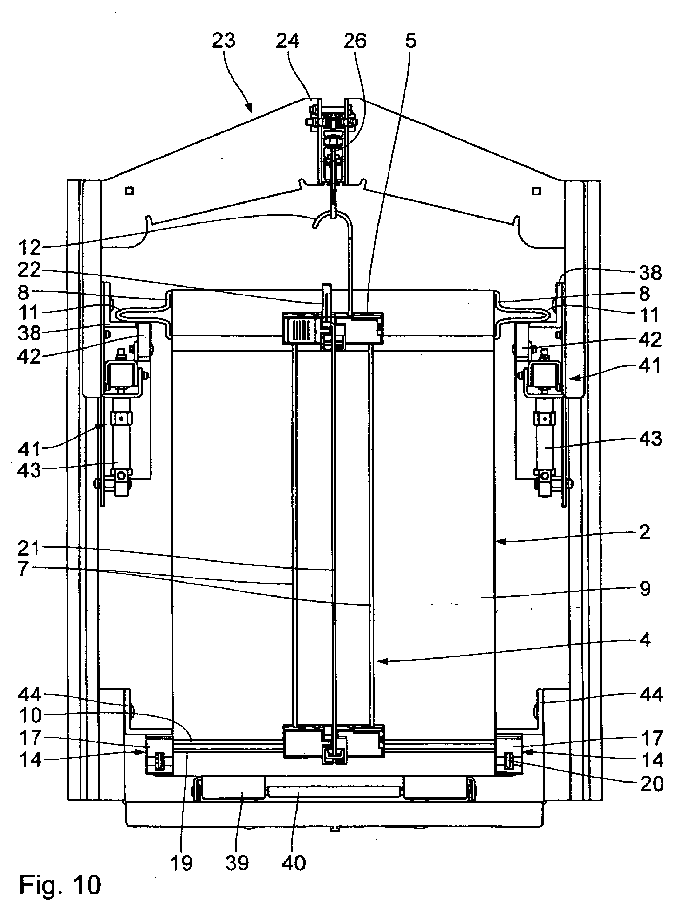

- Fig. 10: eine Ansicht der Trage-Tasche in der Schließstation gemäß dem Sichtpfeil X in Fig. 9.

Die in der Zeichnung dargestellte Transport-Tasche 1 besteht aus zwei Teilen, nämlich einer in sich stabilen Trage-Wand 2 und einer Boden-Seiten-Wand 3, wobei die Boden-Seiten-Wand 3 aus flexiblem Material besteht, beispielsweise einem stabilen Gewebe oder einer stabilen Folie. Die in sich steife Trage-Wand 2 weist einen Trage-Rahmen 4 auf, der einen oberen Trage-Körper 5 und einen unteren Trage-Körper 6 aufweist. Diese Trage-Körper 5, 6 sind mittels Stangen 7 starr miteinander verbunden. Im oberen Trage-Körper 5 ist ein im Wesentlichen rechteckig ausgebildeter Bügel 8 schwenkbar gelagert, an dessen dem oberen Trage-Körper 5 beabstandeter Längsseite die flexible Boden-Seiten-Wand 3 angebracht ist. An seiner im oberen Trage-Körper 5 gelagerten Längsseite ist die Folie oder das Gewebe oder eine dünne Platte, die die Wandfläche 9 der Trage-Wand 2 bildet, angebracht. Die Wandfläche 9 weist im unteren Bereich eine Querstange 10 auf, die im unteren Trage-Körper 6 befestigt ist. Auf diese Weise ist die Trage-Wand 2, auch wenn ihre Wandfläche 9 aus flexiblem Material besteht, in sich flächenstabil. Der Bügel 8 weist an seinen die Wände 2, 3 voneinander distanzierenden Querseiten seitliche Führungs-Vorsprünge 11 auf, deren Funktion weiter unten erläutert wird.

Am oberen Trage-Körper 5 ist ein Trage-Haken 12 als Trage-Kupplung angebracht, zwischen dem und dem oberen Trage-Körper 5 ein Ausricht-Vorsprung 13 vorgesehen ist, der quer zur Ebene der Trage-Wand 2 verläuft und dessen Funktion weiter unten erläutert wird.

An äußeren Enden der unteren Querstange 10 sind unmittelbar seitlich neben der Wandfläche 9 Kupplungen 14 angebracht, die zur Aufnahme und Verriegelung von Kupplungsstiften 15 dienen, die seitlich aus dem unteren Rand 16 der Boden-Seiten-Wand 3 vorstehen und in der Regel Teil einer gleichzeitig auch zur Beschwerung der Boden-Seiten-Wand 3 dienenden, durch einen unteren Saum hindurchgezogenen Stange sind. Die Kupplungen 14 weisen jeweils ein Kupplungs-Gehäuse 17 auf, das eine untere sich nach unten und außen erweiternde Einführöffnung 18 aufweist. Im unteren Trage-Körper 6 ist eine schwenkbare Kurbelwelle 19 gelagert, deren äußere Enden in dem jeweiligen Kupplungs-Gehäuse 17 angeordnete Kupplungs-Haken 20 aufweisen. Mittels dieser Kupplungs-Haken 20 wird der in die jeweilige Einführ-Öffnung 18 eines Kupplungs-Gehäuses 17 eingeführte Kupplungs-Stift 15 gehalten oder freigegeben. Die Verschwenkung der Kurbelwelle 19 und damit der Kupplungs-Haken 20 erfolgt mittels einer zwischen den Stangen 7 angeordneten Betätigungs-Stange 21, die in den Trage-Körpern 5 und 6 gelagert ist. Sie wird mittels eines im oberen Trage-Körper 5 gelagerten Betätigungs-Hebels 22 nach oben gezogen, wodurch die Kupplungen 14 geöffnet werden. Das Schließen der Kupplungen 14 erfolgt mittels einer im unteren Trage-Körper 6 angeordneten Feder 22a, die auf die Kurbelwelle 19 einwirkt, wobei das Gewicht der Betätigungs-Stange 21 unterstützend in Schließrichtung wirkt. Alternativ kann das Schließen auch nur durch das Eigengewicht der Betätigungs-Stange 21 erfolgen, die auf die Kurbelwelle 19 drückt. Wenn - wie erwähnt - die Kupplungs-Stifte 15 jeweils in ein Kupplungs-Gehäuse 17 eingeführt werden, dann drücken diese den jeweiligen Kupplungs-Haken 20 aus seiner geschlossenen Stellung, was durch die Formgebung des jeweiligen Hakens 20 und die Lagerung der Kurbelwelle 19 und damit des Drehpunkts des Hakens 20 ohne weiteres realisierbar ist. Nach dem Einführen des jeweiligen Kupplungs-Stiftes 15 in das entsprechende Kupplungs-Gehäuse 17 schließt der Kupplungs-Haken 20 wieder in der geschilderten Weise.

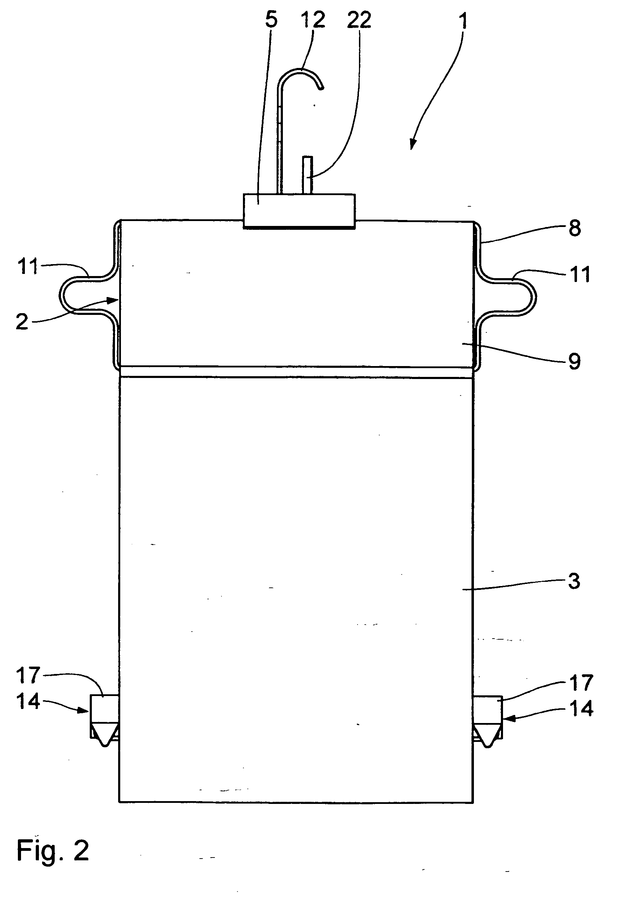

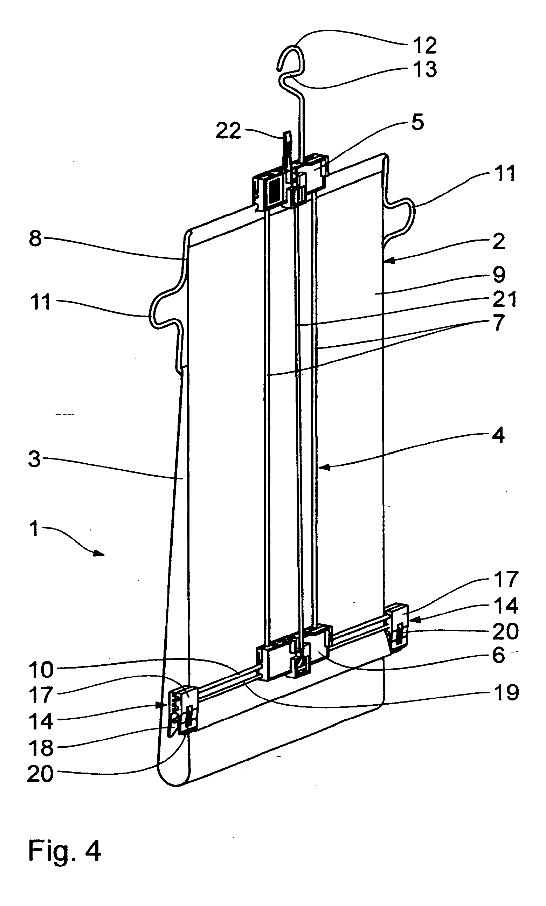

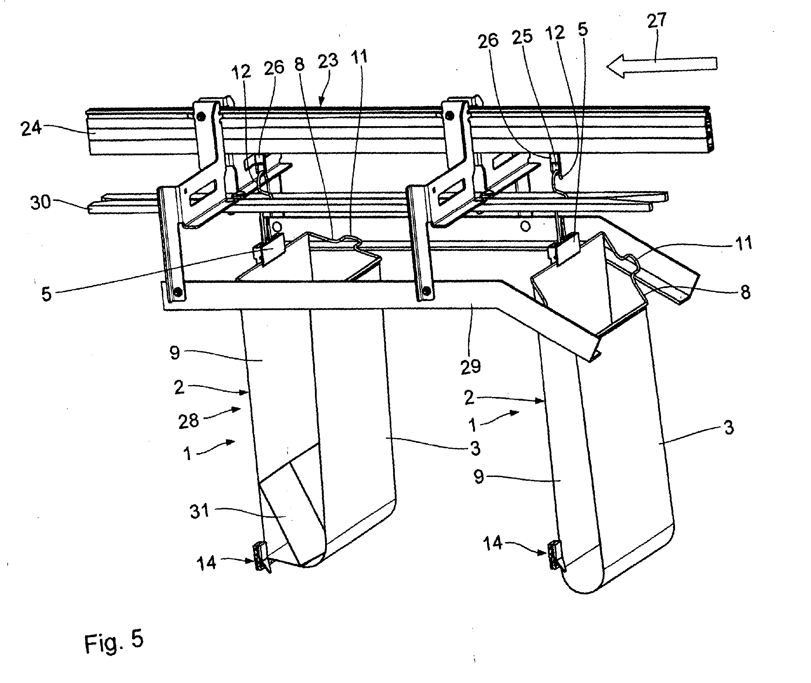

Der Transport der Transport-Taschen 1 erfolgt in einer Förder-Anlage 23, die in üblicher Weise raumfest angeordnete Förder-Schienen 24 aufweist, in denen mit einer Öse 25 versehene Mitnehmer 26 mittels einer nicht dargestellten Transportkette in einer Förderrichtung 27 transportiert werden. Derartige Förder-Anlagen sind beispielsweise aus der EP 1 690 811 A1 bekannt. In jeweils einer Öse 25 eines Mitnehmers 26 ist eine Transport-Tasche 1 mit ihrem Trage-Haken 12 eingehängt. Bevor sie zu einer in Fig. 5 dargestellten Belade-Station 28 kommt, ist sie geschlossen, wie es in Fig. 2 und 4 dargestellt ist. Dies heißt, dass die Kupplungs-Stifte 15 mit den beiden Kupplungen 14 verriegelt sind, so dass die Trage-Wand 2 und die Boden-Seiten-Wand 3 nach unten geschlossen sind.

In der Belade-Station 28 sind Hebe-Schienen 29 angeordnet, auf die die seitlichen Führungs-Vorsprünge 11 des Bügels 8 auflaufen, wodurch dieser etwa in die Waageechte angehoben wird. Hierdurch wird die länger als die Trage-Wand 2 ausgebildete Boden-Seiten-Wand 3 relativ zur Trage-Wand 2 angehoben und gleichzeitig entgegen der Förderrichtung 27 von der Trage-Wand 2 abgehoben, wodurch die Tasche 1 seitlich geöffnet wird, wie in Fig. 5 erkennbar ist. Außerdem sind zwischen der Förderschiene 24 und den Hebe-Schienen 29 Ausricht-Schienen 30 angebracht, zwischen die der Ausricht-Vorsprung 13 einläuft, wodurch die Wände 2, 3 quer zur Förder-richtung 27 ausgerichtet werden, so dass die Transport-Tasche 1 in der Belade-Station 28 eine exakt definierte Position hat, in der eine Ware 31 von der Seite in die geöffnete Transport-Tasche 1 eingelegt werden kann.

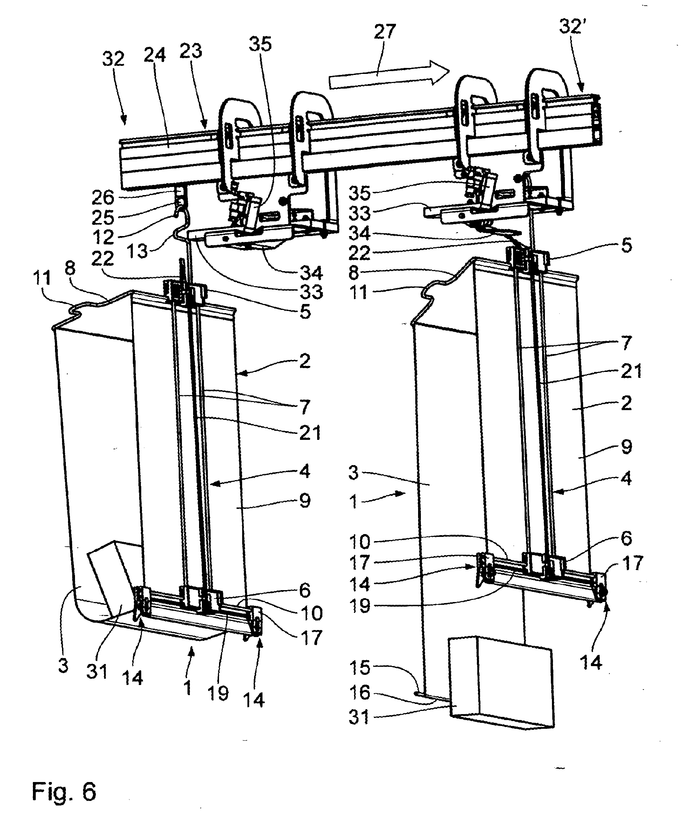

Gleichermaßen, wie es in einer Förder-Anlage 23 mehrere Belade-Stationen 28 geben wird, sind in einer solchen Anlage 23 mehrere Entlade-Stationen 32, 32' vorgesehen. Diese Entlade-Stationen 32, 32' weisen an der Förder-Schiene 24 angebrachte Ausricht-Schienen 33 auf, durch die sichergestellt wird, dass beim Einfahren einer Transport-Tasche 1 in eine Entlade-Station 32, 32' die Transport-Tasche 1 sich in einer Position befindet, in der die Wände 2, 3 quer zur Förderrichtung 27 ausgerichtet sind. Weiterhin ist in jeder Entlade-Station 32, 32' ein Auslösehebel 34 angeordnet, der mittels eines Auslöse-Antriebs 35, beispielsweise eines pneumatisch beaufschlagbaren Kolben-Zylinder-Antriebs in den Weg des Betätigungs-Hebels 22 der Transport-Taschen 1 verschwenkt werden kann. In der in Fig. 6 links dargestellten ersten Entlade-Station 32 befindet sich der Auslöse-Hebel 34 in seiner oberen neutralen Position, so dass eine hindurchgeförderte Transport-Tasche 1 nicht geöffnet wird. In der in Fig. 6 rechts dargestellten Entlade-Station 32' ist dagegen der Auslöse-Hebel 34 mittels des Antriebs 35 in eine untere Auslöse-Position verschwenkt. Beim Hindurchfördern der Transport-Tasche 1 läuft deren in einer angenähert vertikalen Position befindlicher Betätigungs-Hebel 22 gegen den Auslöse-Hebel 34 und wird entgegen der Förderrichtung 27 verschwenkt. Hierdurch wird die Betätigungs-Stange 21 nach oben gezogen und die Kurbelwelle 19 mit den Kupplungs-Haken 20 derart verschwenkt, dass die Kupplungs-Stifte 15 freigegeben werden und aus den Kupplungs-Gehäusen 17 nach unten herausgleiten. Die Boden-Seiten-Wand 3 fällt nach unten; die Ware 31 wird ebenfalls nach unten abgegeben. Die Transport-Tasche 1 ist entladen.

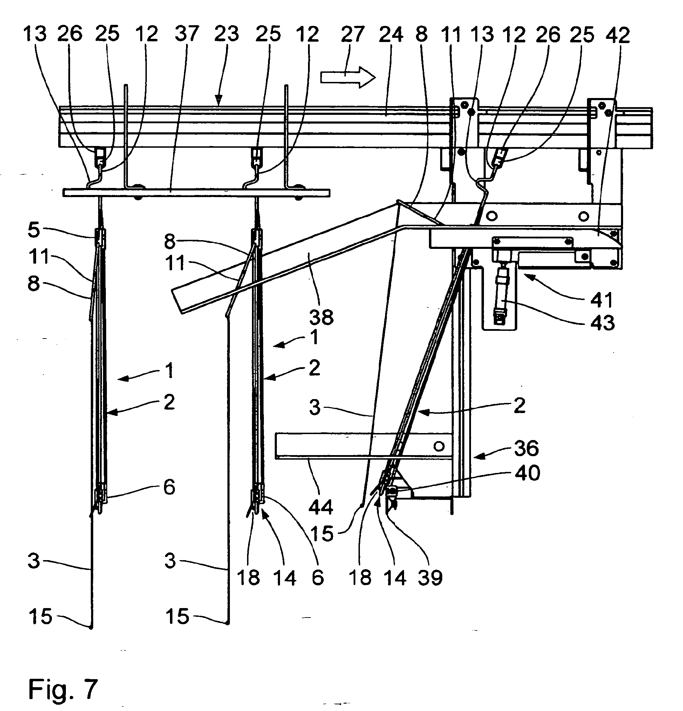

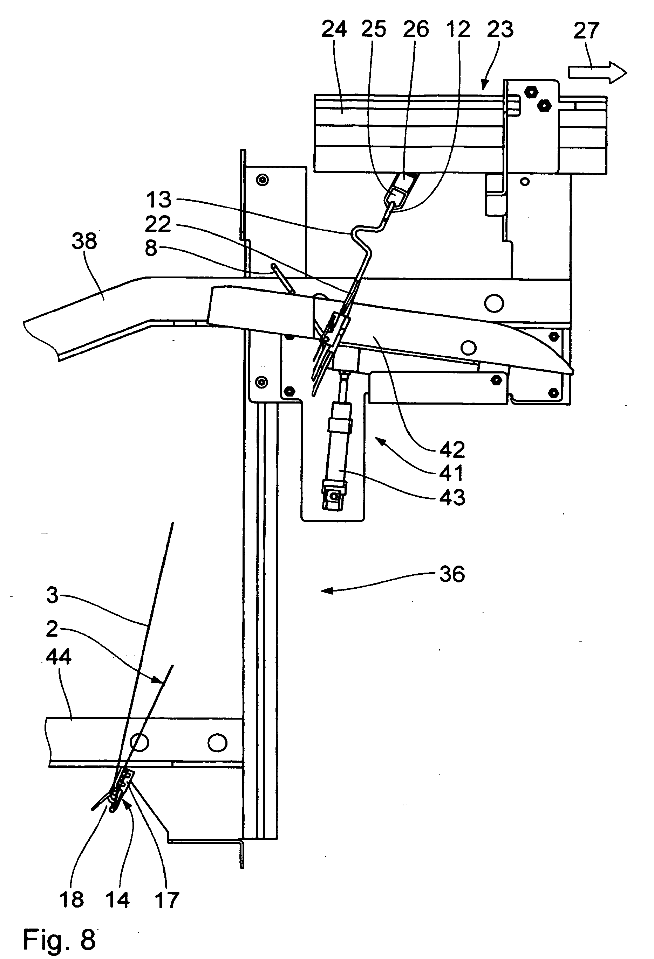

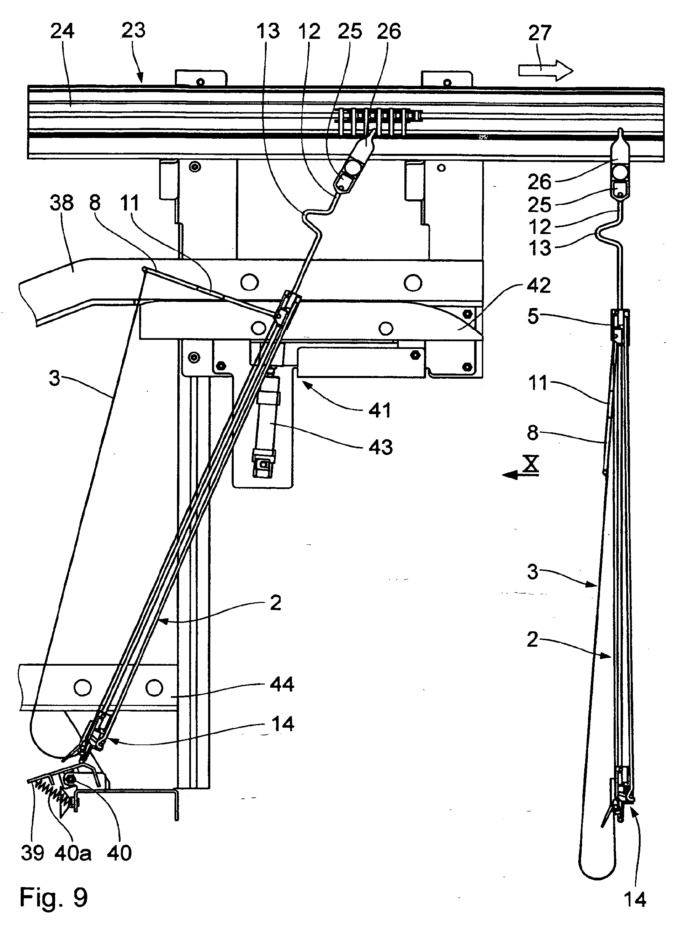

Bevor die entleerte Transport-Tasche 1 wieder eingesetzt werden kann, muss sie in einer einer Belade-Station 28 vorgeordneten Schließ-Station 36 geschlossen werden. Der Schließ-Station 36 sind wiederum Ausricht-Schienen 37 in Förderrichtung 27 vorgeordnet, die die gleiche Funktion haben, wie die zuvor geschilderten Ausricht-Schienen 30 und 33. Beim Einlaufen in die Schließ-Station 36 läuft der Bügel 8 mit seinen seitlichen Führungs-Vorsprüngen 11 auf Hebe-Schienen 38 auf, wodurch der Bügel 8 relativ zur Trage-Wand 2 hochgeschwenkt wird und die gerade nach unten hängende Boden-Seiten-Wand 3 hochzieht. Beim Weiter-Transport der Tasche 1 in Förderrichtung 27 läuft die Trage-Wand 2 gegen einen Anschlag 39, der um eine Schwenkachse 40 gegen die Kraft einer Zug-Feder 40a schwenkbar ausgebildet ist. Die Trage-Wand 2 liegt mit ihrem unteren Bereich entgegen diesen Anschlag 39 an und wird beim Weitertransport in Förderrichtung 27 in eine in Fig. 7 dargestellte schräge Position gezogen, wodurch der Bügel 8 weiter angehoben wird, so dass die Boden-Seiten-Wand 3 weiter angehoben wird. Danach wird der Bügel 8 mittels einer Hub-Einrichtung 41 in eine in Fig. 8 dargestellte Position angehoben. Diese Hub-Einrichtung 41 weist zwei Schwenkhebel 42 auf, die unter die seitlichen Führungs-Vorsprünge 11 greifen und jeweils mittels eines Schwenk-Antriebs 43, beispielsweise eines pneumatisch beaufschlagbaren Kolben-Zylinder-Antriebs, hochschwenkbar sind, wodurch die Boden-Seiten-Wand 3 weiter angehoben wird, so dass ihre Kupplungs-Stifte 15 in den Einführ-Öffnungen 18 der Kupplungs-Gehäuse 17 gefangen und dort mittels der Kupplungs-Haken 20 verriegelt werden. Die Schwenk-Hebel 42 werden durch entsprechende Entlastung der Schwenk-Antriebe 43 wieder in ihre in Fig. 7 dargestellte untere Position gebracht. Beim Weitertransport der Transport-Tasche 1 in Förder-Richtung 27 gelangt der untere Bereich der Trage-Wand 2 oberhalb der Schwenkachse 40, wodurch der Anschlag 39 entsprechend Fig. 9 umgeklappt wird, so dass die Transport-Tasche 1 über den Anschlag 39 gezogen werden kann und dann in ihre senkrechte Hängelage schwenkt, wie es in Fig. 9 rechts dargestellt ist. Damit die Trage-Wand 2 und die Boden-Seiten-Wand 3 beim Verriegeln mittels der Kupplungen 14 seitlich exakt gegeneinander ausgerichtet sind, sind dem unteren Anschlag 39 Seiten- und Höhen-Führungs-Schienen 44 vorgeordnet, zwischen die die unteren Bereiche der Wände 2, 3 einlaufen. Außerdem laufen die Kupplungs-Gehäuse 17 derart unter diese Seiten- und Höhen-Führungs-Schienen 44, dass beim Einkuppeln der Kupplungs-Stifte 15 in die jeweiligen Kupplungs-Gehäuse 17 verhindert wird, dass die Trage-Wand 2 nach oben ausgehoben wird und ein zuverlässiges Einkuppeln nicht erfolgt. Hierdurch wird also sichergestellt, dass auch die Lage der Trage-Wand 2 in ihrer eigenen Längsrichtung während des Einkuppelns der Boden-Seiten-Wand 3 definiert ist.

Nach dem Schließen der Transport-Tasche 1 kann ein neuer Belade-Vorgang in der bereits geschilderten Weise erfolgen.

## Patentansprüche

1. Transport-Tasche (1)
- mit einer Trage-Wand (2), die
-- an ihrem oberen Bereich mit einem Trage-Haken (12) und einem schwenkbaren Bügel (8) versehen ist und
- mit einer zumindest im unteren Bereich flexiblen Boden-Seiten-Wand (3), die
-- in ihrem oberen Bereich mit dem schwenkbaren Bügel verbunden ist,
**dadurch gekennzeichnet, daß** die Trage-Wand (2)
-- an ihrem unteren Bereich mit mindestens einer Kupplung (14),
-- an ihrem oberen Bereich mit Mitteln zum Öffnen der Kupplung (14) und
-- mit Mitteln zum Schließen der Kupplung (14)
versehen ist und die Boden-Seiten-Wand (3)
-- in ihrem unteren Bereich mit Gegen-Kupplungs-Mitteln (15) zur Aufnahme in der mindestens einen Kupplung (14) versehen ist.

2. Transport-Tasche (1) nach Anspruch 1, **dadurch gekennzeichnet,**
**dass** jede Kupplung (14) ein Kupplungs-Gehäuse (17) mit einer unteren Einführ-Öffnung (18) und einem schwenkbaren Kupplungs-Haken (20) aufweist.

3. Transport-Tasche (1) nach Anspruch 1 oder 2, **dadurch gekennzeichnet,**
**dass** die Gegen-Kupplungs-Mittel durch jeweils einen jeder Kupplung (14) zugeordneten Kupplungs-Stift (15) gebildet sind.

4. Transport-Tasche (1) nach einem der Ansprüche 1 bis 3, **dadurch gekennzeichnet,**
**dass** die Mittel zum Öffnen der Kupplung (14) durch einen am oberen Bereich der Trage-Wand (2) angeordneten Betätigungs-Hebel (22) gebildet sind, der mittels einer Betätigungs-Stange (21) und einer Kurbelwelle (19) mit dem mindestens einen Kupplungs-Haken (20) verbunden ist.

5. Transport-Tasche (1) nach Anspruch 4, **dadurch gekennzeichnet,**
**dass** die Mittel zum Schließen der Kupplung (14) zumindest teilweise durch das Gewicht der Betätigungs-Stange (21) gebildet sind.

6. Transport-Tasche (1) nach Anspruch 4 oder 5, **dadurch gekennzeichnet, dass** die Mittel zum Schließen der Kupplung (14) eine auf die Kurbelwelle (19) einwirkende Feder (22a) aufweisen.

7. Transport-Tasche (1) nach Anspruch 2 und 3, **dadurch gekennzeichnet,**
**dass** zum Einführen jedes Kupplungs-Stifts (15) in ein entsprechendes Kupplungs-Gehäuse (17) der entsprechende Kupplungs-Haken (20) unter dem Druck des Kupplungs-Stifts (15) öffnend ausgebildet ist.

8. Transport-Tasche (1) nach einem der Ansprüche 1 bis 7, **dadurch gekennzeichnet,**
**dass** der Bügel (8) seitliche Führungs-Vorsprünge (11) aufweist.

9. Transport-Tasche (1) nach einem der Ansprüche 1 bis 8, **dadurch gekennzeichnet,**
**dass** am oberen Bereich der Trage-Wand (2) ein Ausricht-Vorsprung (13) ausgebildet ist, der quer zur Ebene der Trage-Wand (2) ausgebildet ist.

10. Förder-Anlage (23) mit mindestens eines Transport-Tasche (1) nach einem der Ansprüche 1 bis 9,
- mit einer Förder-Schiene (24) mit in einer Förderrichtung (27) bewegbaren Mitnehmern (26) zur Aufnahme je eines Trage-Hakens (12),
- mit einer Schließ-Station (36) zum Kuppeln der Gegen-Kupplungs-Mittel der flexiblen Boden-Seiten-Wand (3) mit der mindestens einen Kupplung (14) der Trage-Wand (2),
- mit einer Belade-Station (28) mit Mitteln zum Anheben der Bügel (8) zum Distanzieren der Boden-Seiten-Wand (3) von der Trage-Wand (2) entgegen der Förderrichtung (27) und
- mit einer Entlade-Station (32, 32') mit Mitteln zum Auslösen der Mittel zum Öffnen der Kupplung (14).

11. Förder-Anlage (23) nach Anspruch 10, **dadurch gekennzeichnet,**
**dass** die Schließ-Station (36) Hebe-Schienen (38) zum Hochschwenken des Bügels (8) mit der Boden-Seiten-Wand (3) relativ zur Trage-Wand (2) aufweist, und
**dass** ein Anschlag (39) zum vorübergehenden Festhalten des unteren Bereichs der Trage-Wand (2) vorgesehen ist.

12. Förder-Anlage (23) nach Anspruch 10 oder 11, **dadurch gekennzeichnet,**
**dass** die Schließ-Station (36) Führungs-Schienen (44) aufweist, die den unteren Bereich der Trage-Wand (2) nach unten halten.

13. Förder-Anlage (23) nach einem der Ansprüche 10 bis 12, **dadurch gekennzeichnet,**
**dass** die Entlade-Station (32) einen mit dem Betätigungs-Hebel (22) in Eingriff bringbaren Auslöse-Hebel (34) zum Öffnen der Kupplung (14) aufweist.

14. Förder-Anlage (23) nach einem der Ansprüche 10 bis 13, **dadurch gekennzeichnet,**
**dass** an der Schließ-Station (36) und/oder der Belade-Station (28) und/oder der Entlade-Station (32) Ausricht-Schienen (37, 30, 33) zum Ausrichten des Ausricht-Vorsprungs (13) vorgesehen sind.

## Claims

1. Transport bag (1)
- with a carrying wall (2), which
-- is provided, at its upper region, with a carrying hook (12) and a pivotable clamp (8) and
- with a base side wall (3), which is flexible at least in the lower region and which
-- is connected, in its upper region, to the pivotable clamp,
**characterised in that** the carrying wall (2)
-- is provided, at its lower region, with at least one coupling (14),
-- is provided, at its upper region, with means for opening the coupling (14) and
-- with means for closing the coupling (14),
and the base side wall (3)
-- is provided, in its lower region, with counter-coupling means (15) for receiving in the at least one coupling (14).

2. Transport bag (1) according to claim 1, **characterised in that** each coupling (14) has a coupling housing (17) with a lower insertion opening (18) and a pivotable coupling hook (20).

3. Transport bag (1) according to claim 1 or 2, **characterised in that** the counter-coupling means are formed by a respective coupling pin (15) associated with each coupling (14).

4. Transport bag (1) according to any one of claims 1 to 3, **characterised in that** the means for opening the coupling (14) are formed by an actuating lever (22) which is arranged at the upper region of the carrying wall (2) and is connected by means of an actuating rod (21) and a crankshaft (19) to the at least one coupling hook (20).

5. Transport bag (1) according to claim 4, **characterised in that** the means for closing the coupling (14) are at least partially formed by the weight of the actuating rod (21).

6. Transport bag (1) according to claim 4 or 5, **characterised in that** the means for closing the coupling (14) have a spring (22a) acting on the crankshaft (19).

7. Transport bag (1) according to claim 2 and 3, **characterised in that** the corresponding coupling hook (20) is configured opening under the pressure of the coupling pin (15) to introduce each coupling pin (15) into a corresponding coupling housing (17).

8. Transport bag (1) according to any one of claims 1 to 7, **characterised in that** the clamp (8) has lateral guide projections (11).

9. Transport bag (1) according to any one of claims 1 to 8, **characterised in that** an orienting projection (13), which is configured transverse to the plane of the carrying wall (2), is configured on the upper region of the carrying wall (2).

10. Conveyor system (23) with at least one transport bag (1) according to any one of claims 1 to 9,
- with a conveyor rail (24) with drivers (26) which can be moved in a conveying direction (27), to receive a carrying hook (12), in each case
- with a closing station (26) for coupling the counter-coupling means of the flexible base side wall (3) to the at least one coupling (14) of the carrying wall (2),
- with a loading station (28) with means for lifting the clamps (8) to distance the base side wall (3) from the carrying wall (2) counter to the conveying direction (27) and
- with an unloading station (32, 32') with means for triggering the means to open the coupling (14).

11. Conveyor system (23) according to claim 10, **characterised in that** the closing station (36) has lifting rails (28) for pivoting up the clamp (8) with the base side wall (3) relative to the carrying wall (2) and **in that** a stop (39) is provided for temporarily holding the lower region of the carrying wall (2).

12. Conveyor system (23) according to claim 10 or 11, **characterised in that** the closing station (36) has guide rails (44), which hold down the lower region of the carrying wall (2).

13. Conveyor system (23) according to any one of claims 10 to 12, **characterised in that** the unloading station (32) has a trigger lever (34) which can be brought into engagement with the actuating lever (22) to open the coupling (14).

14. Conveyor system (23) according to any one of claims 10 to 13, **characterised in that** orienting rails (37, 30, 33) for orienting the orienting projection (13) are provided at the closing station (36) and/or the loading station (28) and/or the unloading station (32).

## Revendications

1. Sac de transport (1)
- avec une paroi de transport (2), pourvue
-- dans sa partie supérieure d'un crochet de transport (12) et d'un étrier pivotant (8), et
- d'une paroi latérale et de fond (3) flexible au moins dans la partie inférieure, laquelle
-- est reliée à l'étrier pivotant dans sa partie supérieure,
**caractérisé**
**en ce que** la paroi de transport (2) est pourvue
-- dans sa partie inférieure d'au moins un accouplement (14),
-- dans sa partie supérieure de moyens d'ouverture de l'accouplement (14) et
-- de moyens de fermeture de l'accouplement (14), et en ce que la paroi latérale et de fond (3) est pourvue
-- dans sa partie inférieure de moyens d'accouplement opposés à loger dans l'accouplement ou les accouplements (14).

2. Sac de transport (1) selon la revendication 1, **caractérisé**
**en ce que** chaque accouplement (14) comporte un boîtier d'accouplement (17) avec une ouverture d'insertion inférieure (18) et un crochet d'accouplement pivotant (20).

3. Sac de transport (1) selon la revendication 1 ou la revendication 2, **caractérisé**
**en ce que** les moyens d'accouplement opposés sont formés chacun par une broche d'accouplement (15) affectée à chaque accouplement (14).

4. Sac de transport (1) selon l'une des revendications 1 à 3, **caractérisé**
**en ce que** les moyens d'ouverture de l'accouplement (14) sont formés par un levier d'actionnement (22) disposé sur la partie supérieure de la paroi de transport (2), lequel est raccordé au crochet ou aux crochets d'accouplement (20) par une tringle d'actionnement (21) et un arbre coudé (19).

5. Sac de transport (1) selon la revendication 4, **caractérisé**
**en ce que** les moyens de fermeture de l'accouplement (14) sont au moins partiellement formés par le poids de la tringle d'actionnement (21).

6. Sac de transport (1) selon la revendication 4 ou la revendication 5, **caractérisé**
**en ce que** les moyens de fermeture de l'accouplement (14) comportent un ressort (22a) agissant sur l'arbre coudé (19).

7. Sac de transport (1) selon les revendications 2 et 3, **caractérisé**
**en ce que** pour l'insertion de chaque broche d'accouplement (15) dans un boîtier d'accouplement (17) correspondant, le crochet d'accouplement (20) correspondant est réalisé pour s'ouvrir sous la pression de la broche d'accouplement (15).

8. Sac de transport (1) selon l'une des revendications 1 à 7, **caractérisé**
**en ce que** l'étrier (8) comporte des saillies de guidage latérales (11).

9. Sac de transport (1) selon l'une des revendications 1 à 8, **caractérisé**
**en ce qu'**une saillie d'alignement (13) est formée sur la partie supérieure de la paroi de transport (2), transversalement au plan de la paroi de transport (2).

10. Installation de transport (23) avec au moins un sac de transport (1) selon l'une des revendications 1 à 9,
- avec un rail de transport (24) pourvu d'entraîneurs (26) déplaçables dans une direction de transport (27) pour la réception d'un crochet de transport (12) chacun,
- avec une station de fermeture (36) pour l'accouplement des moyens d'accouplement opposés de la paroi latérale et de fond (3) flexible avec l'accouplement ou les accouplements (14) de la paroi de transport (2),
- avec une station de chargement (28) pourvue de moyens de soulèvement de l'étrier (8) pour espacer la paroi latérale et de fond (3) de la paroi de transport (2) dans la direction contraire à la direction de transport (27), et
- avec une station de déchargement (32, 32') pourvue de moyens de déclenchement des moyens d'ouverture de l'accouplement (14).

11. Installation de transport (23) selon la revendication 10, **caractérisée**
**en ce que** la station de fermeture (36) comporte des rails de soulèvement (38) pour le relevage de l'étrier (8) avec la paroi latérale et de fond (3) relativement à la paroi de transport (2), et
**en ce qu'**une butée (39) est prévue pour un maintien transitoire de la partie inférieure de la paroi de transport (2).

12. Installation de transport (23) selon la revendication 10 ou la revendication 11, **caractérisée**
**en ce que** la station de fermeture (36) comporte des rails de guidage (44) qui retiennent vers le bas la partie inférieure de la paroi de transport (2).

13. Installation de transport (23) selon l'une des revendications 10 à 12, **caractérisée**
**en ce que** la station de déchargement (32) comporte un levier de déclenchement (34) pouvant être amené en prise avec le levier d'actionnement (22) pour l'ouverture de l'accouplement (14).

14. Installation de transport (23) selon l'une des revendications 10 à 13, **caractérisée**
**en ce que** des rails d'alignement (37, 30, 33) sont prévus sur la station de fermeture (36) et/ou la station de chargement (28) et/ou la station de déchargement (32) pour l'alignement de la saillie d'alignement (13).
